# FASCICULE DE BREVET EUROPEEN

(11) **EP 2 179 705 B1**
(45) Date de publication et mention de la délivrance du brevet: **13.07.2011**
(21) Numéro de dépôt: 09173547.2
(22) Date de dépôt: 20.10.2009
(51) Int. Cl.: A61C 5/06

(54) **Capsule et procédé de distribution d'un produit**
Kapsel und Verfahren zur Verteilung eines Produkts
Capsule and method for distributing a product

(30) Priorité: 21.10.2008 FR 0857143
(43) Date de publication de la demande: 28.04.2010
(73) Titulaire: Prophytec, 01100 Oyonnax (FR)
(72) Inventeur: Bolle, Jérémy, 01100 Oyonnax (FR); Renard, Jean-Yves, 01100 Oyonnax (FR)
(74) Mandataire: Myon, Gérard Jean-Pierre

(56) Documents cités:
- EP-A- 0 225 265
- FR-A- 2 558 801
- US-A- 3 346 147

## Description

La présente invention a trait à une capsule de distribution d'un produit, notamment d'un produit pâteux, ainsi qu'à un procédé de distribution d'un produit.

Dans le domaine dentaire, il est connu d'utiliser une capsule mélangeuse pour mélanger plusieurs composants d'un produit, par exemple les composants d'une pâte de blanchiment des dents ou d'une résine, puis pour distribuer le produit mélangé directement sur les dents d'un patient. US-A-2003176834 décrit une telle capsule mélangeuse pré-remplie, dans laquelle les composants d'un produit à distribuer sont initialement séparés. Dans cette capsule connue, un premier composant, sous forme de poudre, est reçu dans une chambre de mélange délimitée par le corps de la capsule, alors qu'un deuxième composant, sous forme liquide, est reçu dans le volume intérieur d'un piston. Le piston est prévu pour coulisser dans la chambre de mélange et est équipé d'un poussoir propre à provoquer, en temps voulu, l'écoulement du composant liquide depuis le piston vers la chambre de mélange, à travers une ouverture du piston initialement fermée. Lorsque le composant liquide a été introduit dans la chambre de mélange, la capsule est classiquement placée dans un appareil de mélange par vibration, ce qui permet de mélanger les composants réunis dans la chambre de mélange. La capsule est ensuite insérée dans un outil destiné à exercer un effort de poussée sur le piston, de telle sorte que le piston pousse le produit mélangé hors de la chambre de mélange pour sa distribution.

La capsule mélangeuse décrite dans US-A-2003176834 est pré-remplie, avec des proportions prédéfinies des différents composants du produit à distribuer. Dès lors, il n'est pas possible, avec une telle capsule, de moduler les propriétés du produit à distribuer, notamment sa viscosité. De plus, cette capsule connue présente une structure complexe qui met en jeu plusieurs pièces, assemblées de manière à maintenir les différents composants du produit séparés les uns des autres avant l'utilisation de la capsule. Or, l'assemblage de ces différentes pièces impose un temps et un coût de fabrication élevés de la capsule.

Par ailleurs, EP-A-0 225 265 divulgue une seringue destinée à l'injection de produit pâteux et qui comprend un tube de prélèvement mis en place dans un corps principal. Un piston équipé d'un bouton-poussoir est introduit dans un orifice d'une bague de préhension montée à l'extrémité du tube de préhension. Cette seringue comporte de nombreuses pièces et est relativement complexe à fabriquer.

C'est à ces inconvénients qu'entend plus particulièrement remédier l'invention en proposant une capsule de distribution de produit dont le coût de fabrication est limité et qui permet de moduler les propriétés du produit à distribuer.

A cet effet, l'invention a pour objet une capsule de distribution d'un produit, notamment d'un produit pâteux, comprenant un corps qui définit une chambre intérieure de réception du produit et est muni d'une ouverture de distribution de produit, un piston étant apte à coulisser dans la chambre le long d'une paroi interne de la chambre, caractérisée en ce que le corps comporte une première et une deuxième parties aptes à s'emboîter l'une par rapport à l'autre, la première partie comportant le piston et une première portion de la paroi interne de la chambre, le piston et la première portion de paroi étant reliés l'un à l'autre par des moyens sécables, alors que la deuxième partie comporte une deuxième portion de la paroi interne, les première et deuxième portions de paroi formant la paroi interne de la chambre en configuration emboîtée des première et deuxième parties.

Selon d'autres caractéristiques avantageuses d'une capsule conforme à l'invention, prises isolément ou selon toutes les combinaisons techniquement possibles :
- la chambre est étanche en configuration emboîtée des première et deuxième parties avec l'ouverture de distribution, ou un canal qui s'étend à partir de l'ouverture de distribution, obturé(e) ;
- la première partie définit un volume de réception de produit, ce volume de réception étant accessible par une ouverture d'introduction de produit qui est délimitée par la première portion de paroi transversalement par rapport au piston ;
- la paroi interne de la chambre est une paroi cylindrique, les première et deuxième portions de paroi étant deux portions complémentaires de la paroi interne cylindrique sectionnée selon un plan ;
- le plan de section de la paroi interne cylindrique est incliné par rapport à l'axe central du cylindre défini par la paroi interne selon un angle compris entre environ 1° et 45° ;
- la deuxième partie comporte une paroi tubulaire définissant un volume intérieur de réception de la première portion de paroi, la deuxième portion de paroi faisant saillie intérieurement par rapport à la paroi tubulaire, les première et deuxième parties étant aptes à s'emboîter l'une par rapport à l'autre par coulissement de la première portion de paroi dans le volume intérieur de la paroi tubulaire ;
- la deuxième partie comporte des moyens d'alignement axial de la deuxième partie par rapport à un outil d'actionnement du coulissement du piston dans la chambre le long de la paroi interne en configuration emboîtée des première et deuxième parties ;
- la première partie est une pièce moulée par injection en une seule pièce ;
- l'une parmi la première partie et la deuxième partie comporte des moyens de fixation d'une masselotte, ces moyens de fixation étant aptes à libérer la masselotte dans la chambre en configuration emboîtée des première et deuxième parties.

L'invention a également pour objet un procédé de distribution d'un produit, notamment d'un produit pâteux, au moyen d'une capsule telle que décrite ci-dessus, comprenant des étapes dans lesquelles :
- on introduit le produit dans une ou chaque partie du corps parmi la première partie et la deuxième partie ;
- on emboîte les première et deuxième parties l'une par rapport à l'autre ;
- on déchire les moyens sécables et on déplace le piston en coulissement dans la chambre le long de la paroi interne de manière à distribuer le produit à travers l'ouverture de distribution.

Un tel procédé, appliqué à la distribution d'un produit bi-composant, comprend des étapes dans lesquelles :
- on introduit un premier composant du produit dans la première partie du corps ;
- on introduit le deuxième composant du produit dans la deuxième partie du corps ;
- on emboîte les première et deuxième parties l'une par rapport à l'autre ;
- on mélange les premier et deuxième composants du produit dans la chambre de manière à former le produit ;
- on déchire les moyens sécables et on déplace le piston en coulissement dans la chambre le long de la paroi interne de manière à distribuer le produit à travers l'ouverture de distribution.

Les caractéristiques et avantages de l'invention apparaîtront dans la description qui va suivre d'un mode de réalisation d'une capsule de distribution selon l'invention, donnée uniquement à titre d'exemple et faite en se référant aux dessins annexés dans lesquels :
- la figure 1 est une vue en perspective éclatée d'une capsule de distribution conforme à l'invention ;
- la figure 2 est une vue à plus grande échelle du détail II de la figure 1 ;
- la figure 3 est une vue analogue à la figure 1, en configuration assemblée de la capsule ;
- la figure 4 est une coupe selon le plan IV de la figure 3 ;
- la figure 5 est une coupe selon la ligne V-V de la figure 4 ;
- la figure 6 est une coupe analogue à la figure 4 lors d'une première étape de distribution d'un produit au moyen de la capsule de la figure 1 ;
- la figure 7 est une coupe analogue à la figure 4 lors d'une deuxième étape de distribution d'un produit au moyen de la capsule de la figure 1 ; et
- la figure 8 est une coupe analogue à la figure 4 lors d'une troisième étape de distribution d'un produit au moyen de la capsule de la figure 1.

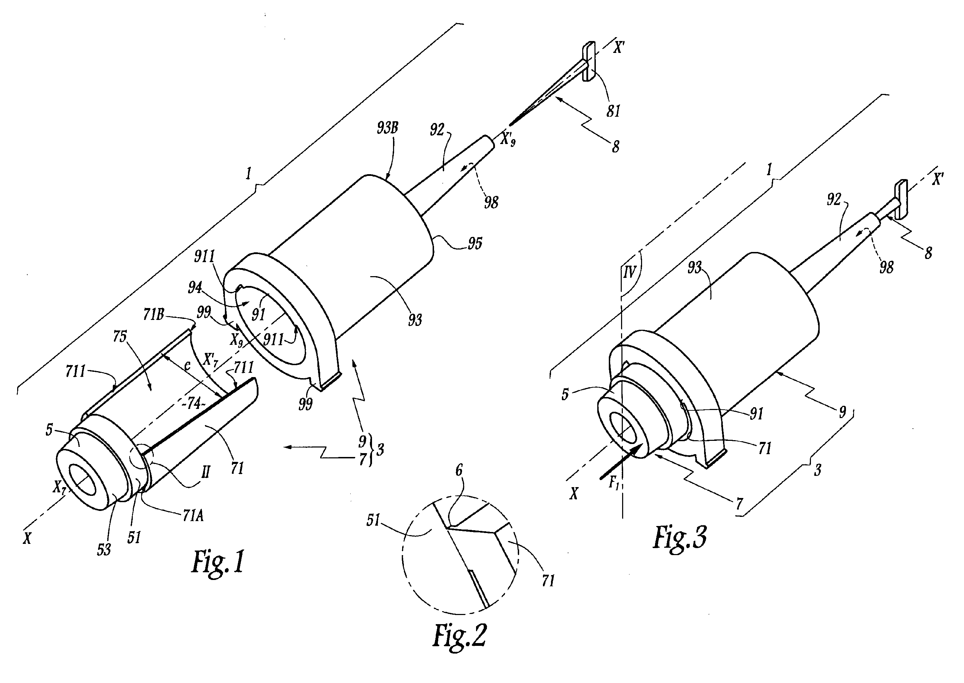

La capsule de distribution 1 représentée sur les figures est destinée à la distribution d'un produit bi-composant 2 pâteux, par exemple une pâte de blanchiment des dents, dont les composants 21 et 23 sont initialement conditionnés de manière séparée. La capsule 1 comprend un corps 3, qui définit une chambre intérieure 4 de réception du produit 2. Comme bien visible sur la figure 1, le corps 3 comporte un tiroir 7 et une enveloppe 9 aptes à s'emmancher l'un dans l'autre dans la direction d'un axe d'emmanchement X-X', qui est un axe longitudinal commun au tiroir 7 et à l'enveloppe 9.

Le tiroir 7 du corps 3 comprend une portion 71 de paroi cylindrique à section circulaire, centrée sur un axe X₇-X₇', et un piston 5, relié à une extrémité 71 A de la portion de paroi 71 au moyen de pontets sécables 6. Le piston 5 comporte un disque 51 qui présente un diamètre d₅₁ égal au diamètre intérieur d₇₁ de la portion de paroi cylindrique 71. Une face avant 51B du disque 51 est reliée, au moyen des pontets 6, à l'extrémité 71 A de la portion de paroi 71, de telle sorte que le disque 51 est centré sur l'axe X₇-X₇'- Une face arrière 51 A du disque 51, opposée à la face 51B, porte une couronne 53 de réception d'un outil en vue de l'application d'un effort de poussée sur la face 51 A.

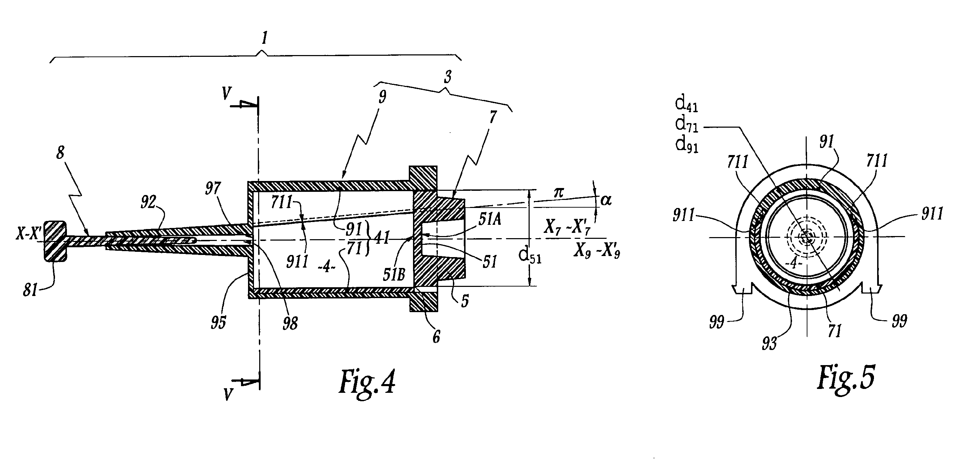

Comme il ressort plus particulièrement de la figure 4, la portion de paroi 71 est une portion de paroi cylindrique sectionnée, ou décalottée, selon un plan π incliné par rapport à l'axe X₇-X₇' du cylindre. Dans l'exemple représenté, l'angle α d'inclinaison du plan π par rapport à l'axe X₇-X₇' est de l'ordre de 5°. La portion de paroi 71 coupée selon le plan π définit ainsi un volume intérieur 74, qui débouche non seulement au niveau de l'extrémité 71B de la portion de paroi 71 opposée au piston 5 mais également au niveau d'une ouverture longitudinale 75. L'ouverture 75 s'étend transversalement par rapport au piston 5 et est bordée latéralement par deux bords libres longitudinaux 711 de la portion de paroi 71.

Comme montré sur la figure 4, le plan π est incliné par rapport à l'axe X₇-X₇' de manière à s'éloigner de l'axe X₇-X₇' en direction du piston 5. Du fait de cette inclinaison spécifique du plan π, l'ouverture longitudinale 75 du tiroir 7 s'évase, c'est-à-dire présente un écartement e entre les bords libres 711 qui augmente, depuis l'extrémité 71 A vers l'extrémité 71B de la portion de paroi 71.

De manière plus générale, l'angle α d'inclinaison du plan π par rapport à l'axe X₇-X₇' est avantageusement compris entre environ 1° et 45°.

L'enveloppe 9 du corps 3 comporte une paroi 93 tubulaire à section circulaire centrée sur un axe X₉-X₉', qui définit un volume intérieur 94 de l'enveloppe. Le volume 94 est fermé, à une extrémité 93B de la paroi tubulaire 93, par une paroi d'extrémité 95. La paroi d'extrémité 95 est percée d'une ouverture 97 de distribution de produit, à partir de laquelle s'étend un canal de distribution 98 formé à l'intérieur d'une buse 92 d'application de produit. La buse 92 est monobloc avec la paroi d'extrémité 95. Outre le corps 3, la capsule 1 comprend également une tige 8 d'obturation du canal de distribution 98. Comme visible notamment sur la figure 4, la tige 8 est apte à remplir partiellement le canal 98 et est munie d'une tête de préhension 81.

La paroi tubulaire 93 de l'enveloppe 9 comporte intérieurement une portion 91 de paroi cylindrique à section circulaire, également centrée sur l'axe X₉-X₉', qui fait saillie par rapport à la paroi tubulaire 93 dans le volume intérieur 94. La portion de paroi 91 de l'enveloppe 9 et la portion de paroi 71 du tiroir 7 sont conçues de manière à former ensemble, en configuration emmanchée du tiroir 7 dans l'enveloppe 9, une paroi interne 41 de la chambre 4 du corps 3. En d'autres termes, les portions de paroi 71 et 91 sont deux portions complémentaires de la paroi interne 41 sectionnée selon le plan π.

Plus précisément, la portion de paroi 91 est une portion de paroi cylindrique sectionnée selon le plan π, qui est incliné par rapport à l'axe X₉-X₉' de manière à se rapprocher de l'axe X₉-X₉' en direction de la paroi d'extrémité 95, et présente un diamètre intérieur d₉₁ égal au diamètre intérieur d₇₁ de la portion de paroi 71. La portion de paroi 91 est ainsi propre à fermer l'ouverture longitudinale 75 du tiroir 7 par la venue en appui de bords libres longitudinaux 911 de la portion de paroi 91 contre les bords libres 711 de la portion de paroi 71, comme montré sur la coupe de la figure 5.

Le tiroir 7 est apte à s'emmancher dans l'enveloppe 9 par coulissement dans le volume intérieur 94 de la paroi tubulaire 93 lorsque les axes X₇-X₇' et X₉-X₉' sont confondus selon l'axe d'emmanchement X-X' et lorsque le tiroir 7 est orienté angulairement par rapport à l'enveloppe 9, autour de l'axe X-X', de telle sorte que les bords libres 711 et 911 sont en regard deux à deux, avec l'extrémité 71B du tiroir dirigée vers la paroi d'extrémité 95 de l'enveloppe. En configuration emmanchée du tiroir 7 dans l'enveloppe 9, les bords libres 711 et 911 sont en appui deux à deux de telle sorte que la paroi interne 41 de la chambre 4, formée par les portions de paroi 71 et 91, est sensiblement continue autour des axes X-X', X₇-X₇' et X₉-X₉' qui sont alors confondus. La paroi interne 41 est cylindrique à section circulaire centrée sur l'axe d'emmanchement X-X' et présente un diamètre intérieur d₄₁ égal au diamètre intérieur d₇₁ ou d₉₁ des portions de paroi 71 et 91, c'est-à-dire au diamètre extérieur d₅₁ du disque 51 du piston 5.

Ainsi, en configuration emmanchée du tiroir 7 dans l'enveloppe 9, le piston 5 est apte à coulisser de manière étanche dans la chambre 4, le long de la paroi interne 41, selon la direction de l'axe d'emmanchement X-X'. En d'autres termes, le piston 5 est en contact coulissant et étanche avec la paroi interne 41 de la chambre 4 en configuration emmanchée du tiroir 7 dans l'enveloppe 9. De plus, la chambre 4 du corps 3 est étanche dans la configuration emmanchée du tiroir 7 et de l'enveloppe 9 avec le canal de distribution 98 obturé au moyen de la tige 8.

Dans la configuration emmanchée du tiroir 7 dans l'enveloppe 9, représentée sur les figures 3, 4 et 7, le piston 5 peut être déplacé en coulissement dans la chambre 4, le long de la paroi interne 41 et en direction de la paroi d'extrémité 95, sous l'effet d'un effort de poussée F₂ exercé sur la face 51A du disque 51. Un tel effort de poussée F₂ peut notamment être appliqué sur la face 51 A au moyen d'une pince dont une partie mobile en translation peut être reçue dans la couronne 53 du piston, de manière à exercer l'effort de poussée F₂ sur la face 51 A, alors que l'enveloppe 9 du corps 3 est immobilisée par rapport à une partie fixe de la pince.

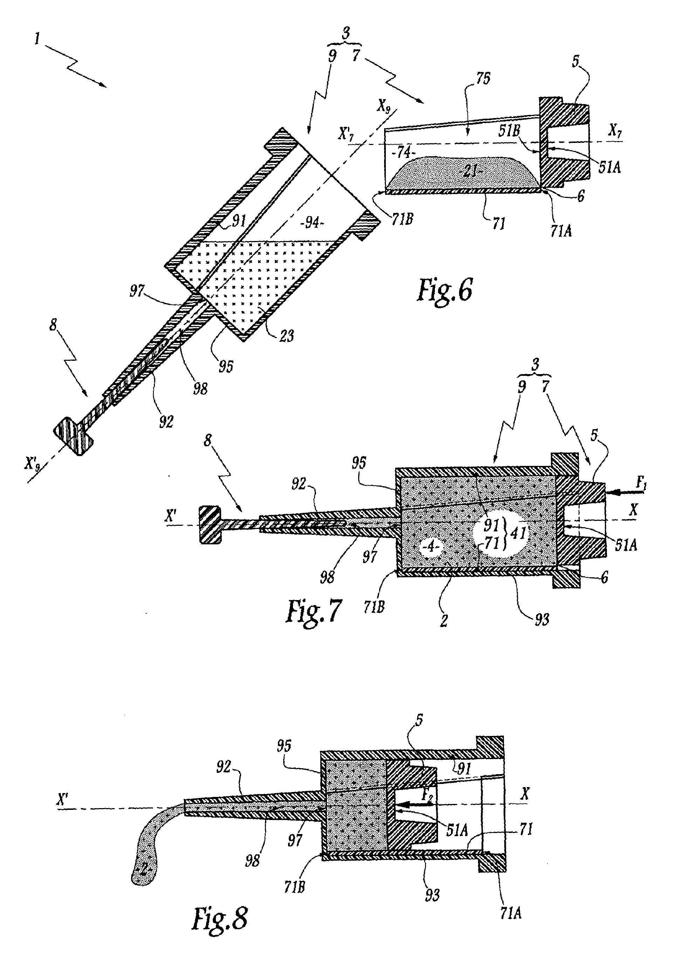

Un tel déplacement en coulissement du piston 5 dans la chambre 4 le long de la paroi interne 41 entraîne une diminution du volume de la chambre 4. Il en résulte une poussée du produit 2 contenu dans la chambre 4 vers l'extérieur de la chambre à travers l'ouverture 97 et le canal 98 de distribution de produit. Le produit 2 peut ainsi être distribué à partir du canal 98, dont la tige 8 a préalablement été retirée, comme montré sur la figure 8.

De manière avantageuse, le tiroir 7 et l'enveloppe 9 du corps 3 sont deux pièces moulées par injection d'un matériau synthétique. En particulier, le tiroir 7 est moulé en une seule pièce, les pontets sécables 6 de liaison entre le piston 5 et la portion de paroi 71 étant formés directement lors du moulage par injection.

Un procédé de distribution du produit bi-composant 2 au moyen de la capsule 1 selon l'invention comprend des étapes telles que décrites ci-dessous.

Tout d'abord, on introduit un premier composant 21 du produit 2, qui se présente sous la forme d'une poudre dans l'exemple représenté, dans le volume intérieur 74 du tiroir 7. On introduit également le deuxième composant 23 du produit 2, qui se présente sous la forme d'un liquide dans l'exemple représenté, dans le volume intérieur 94 de l'enveloppe 9 dont le canal de distribution 98 a préalablement été obturé au moyen de la tige 8. On obtient alors la configuration de la capsule 1 visible sur la figure 6.

On emmanche alors le tiroir 7 dans l'enveloppe 9. A cet effet, on positionne le tiroir 7 et l'enveloppe 9 de telle sorte que les axes X₇-X₇' et X₉-X₉' sont confondus selon l'axe d'emmanchement X-X' et que les bords libres 711 et 911 sont en regard deux à deux, l'extrémité 71B du tiroir étant dirigée vers la paroi d'extrémité 95 de l'enveloppe. A partir de cette position relative du tiroir 7 et de l'enveloppe 9, on fait coulisser le tiroir 7 dans le volume intérieur 94 de l'enveloppe 9, parallèlement à l'axe d'emmanchement X-X'. Ce coulissement peut être actionné manuellement par un opérateur qui exerce un effort de poussée F₁ sur la couronne 53 du piston 5, comme montré sur la figure 7, et se poursuit jusqu'à la venue en butée de l'extrémité 71B de la portion de paroi 71 contre la paroi d'extrémité 95 de l'enveloppe 9. Au cours de ce coulissement, les bords libres longitudinaux 711 de la portion de paroi 71 se déplacent chacun en regard du bord libre 911 correspondant de la portion de paroi 91. Du fait de l'inclinaison du plan π par rapport à l'axe X-X', les bords libres 711 et 911 viennent progressivement en contact deux à deux, au fur et à mesure de l'emmanchement du tiroir 7 dans l'enveloppe 9. En particulier, la chambre 4 devient étanche progressivement, par un effet de coincement graduel du tiroir 7 par rapport à l'enveloppe 9, jusqu'à la venue de chaque bord libre 711 en appui ferme contre le bord libre 911 correspondant.

Lorsque l'extrémité 71B est en appui contre la paroi d'extrémité 95, on obtient la configuration emmanchée du tiroir 7 dans l'enveloppe 9, visible sur la figure 7, dans laquelle les portions de paroi 71 et 91 définissent ensemble la paroi interne 41 de la chambre 4 du corps 3. Dans la configuration emmanchée du tiroir 7 dans l'enveloppe 9 et obturée du canal de distribution 98 par la tige 8, telle que montrée sur la figure 7, la chambre 4 est étanche.

Il est alors possible de mélanger, par vibration, les composants 21 et 23 du produit 2 à l'intérieur de la chambre 4, en plaçant la capsule 1 dans un appareil de mélange par vibration. On obtient ainsi la capsule 1 remplie du produit 2 pâteux, comme visible sur la figure 7.

Selon une variante non représentée de l'invention, la capsule 1 peut comprendre une masselotte, telle qu'une bille en acier, solidaire de l'un parmi le tiroir 7 ou l'enveloppe 9. A titre d'exemple non limitatif, une telle masselotte peut être fixée sur le disque 51 du tiroir 7, par clipsage dans une encoche formée du côté de la face 51B du disque 51 lors du moulage par injection du tiroir 7. Quel que soit le moyen de fixation de la masselotte par rapport au tiroir 7 ou à l'enveloppe 9, ce moyen de fixation doit permettre la libération de la masselotte dans la chambre 4 lors de l'agitation, notamment par vibration, de la capsule 1 en configuration emmanchée du tiroir 7 dans l'enveloppe 9. Ainsi, la masselotte est apte à se déplacer dans la chambre 4 lors du mélange par vibration, ce qui contribue au mélange des composants 21 et 23 et à la formation d'un produit pâteux 2 homogène. Dans cette variante, la capsule 1 est avantageusement munie de moyens empêchant l'obturation par la masselotte de l'ouverture 97 et du canal 98 de distribution de produit. A titre d'exemple, l'enveloppe 9 peut comporter un cône de réception de la masselotte, aménagé au voisinage de l'ouverture de distribution 97 et bordé d'orifices de passage de produit 2.

Une fois le mélange réalisé, on retire la tige 8 par rapport au canal de distribution 98 et on déplace le piston 5 en coulissement dans la chambre 4, après avoir déchiré les pontets sécables 6, le long de la paroi interne 41 et en direction de la paroi d'extrémité 95, de manière à distribuer le produit 2 à travers l'ouverture 97 et le canal 98 de distribution, comme montré sur la figure 8. A cet effet, on exerce un effort de poussée F₂ sur la face 51 A du disque 51 du piston 5. Comme la portion de paroi 71 est immobilisée en appui contre la paroi d'extrémité 95 de l'enveloppe 9, l'effort F₂ exercé sur le piston 5 entraîne tout d'abord la rupture des pontets 6 de liaison entre le piston 5 et la portion de paroi 71, puis le coulissement du piston 5, désolidarisé par rapport à la portion de paroi 71, à l'intérieur de la chambre 4 délimitée par les portions de paroi 71 et 91.

En particulier, l'effort de poussée F₂ peut être exercé sur la face 51 A au moyen d'une pince non représentée, conforme à l'enseignement de EP-A-1 795 146, dont une partie mobile en translation est reçue dans la couronne 53 du piston et exerce l'effort de poussée F₂ sur la face 51 A, alors que l'enveloppe 9 est immobilisée par rapport à une partie fixe de la pince. Afin de garantir l'orientation de l'effort F₂, exercé par la partie mobile de la pince, selon la direction de l'axe d'emmanchement X-X', et donc un coulissement optimal du piston selon cette direction, l'enveloppe 9 est munie de pattes 99 d'alignement axial de l'enveloppe par rapport à la pince.

Comme il ressort du mode de réalisation décrit précédemment, la capsule de distribution 1 conforme à l'invention présente une structure simple. En effet, le corps de capsule 3 comprend uniquement deux pièces, à savoir le tiroir 7, qui intègre le piston 5, et l'enveloppe 9. De manière particulièrement avantageuse, chaque pièce 7 ou 9 constitutive de la capsule 1 peut être obtenue par moulage par injection d'une matière synthétique, ce qui permet de limiter le coût de fabrication de la capsule.

En outre, comme il ressort de l'exemple décrit ci-dessus mettant en jeu la distribution d'un produit bi-composant 2, la structure de la capsule 1 selon l'invention permet de maintenir les différents composants d'un produit multi-composant séparés les uns des autres avant l'utilisation de la capsule. En effet, le tiroir 7 définit un premier volume 74 de réception de produit, propre à recevoir un premier composant, tandis que l'enveloppe 9 définit un deuxième volume 94 de réception de produit, propre à recevoir un deuxième composant.

La capsule 1 selon l'invention présente également l'avantage d'être remplissable directement par l'utilisateur, juste avant la distribution d'un produit. Il est ainsi possible d'adapter les proportions relatives des composants d'un produit à distribuer et de maîtriser les propriétés de ce produit, notamment sa viscosité. Le caractère remplissable de la capsule 1 selon l'invention permet également à l'utilisateur d'acheter les composants du produit en grande quantité, ce qui limite le coût de ces composants, notamment par rapport à leur coût lorsqu'ils sont conditionnés en petite quantité dans des capsules mélangeuses classiques.

Par ailleurs, la structure spécifique de la capsule 1 selon l'invention, qui comporte un tiroir 7 dont une paroi 71 définit un volume 74 de réception de produit, accessible par une ouverture longitudinale 75 transversale par rapport au piston 5, facilite le remplissage de la capsule. En particulier, la possibilité de remplissage de la capsule par une telle ouverture latérale de grande dimension plutôt que par une extrémité ouverte d'un corps de capsule cylindrique, comme c'est le cas avec les capsules de l'état de la technique, est avantageuse pour la distribution d'un produit initialement pâteux, tel qu'un produit mono-composant pâteux. Il est en effet alors possible de remplir le tiroir 7 de la capsule par étalage du produit pâteux dans le volume intérieur 74 du tiroir, par exemple au moyen d'une spatule. La forme spécifique du tiroir 7 ouvert latéralement lui permet également d'être utilisé comme élément doseur, de manière analogue à une cuillère de dosage, permettant de prendre une quantité définie de produit, par exemple d'un produit poudreux, dans son récipient de conditionnement.

L'invention n'est pas limitée à l'exemple décrit et représenté. En particulier, le corps 3 d'une capsule de distribution conforme à l'invention peut être de toute forme appropriée autre que cylindrique à section circulaire. La paroi interne 41 de la chambre intérieure 4 peut notamment être à section autre que circulaire, par exemple à section carrée, la section du piston 5 étant adaptée en conséquence.

De plus, l'ouverture 75 du tiroir 7 peut être définie par découpe de la portion de paroi 71 selon un plan parallèle à l'axe central X-X' de la capsule, au lieu d'un plan incliné par rapport à cet axe. L'inclinaison du plan π par rapport à l'axe X-X' telle que décrite précédemment permet toutefois d'assurer un verrouillage du tiroir 7 par rapport à l'enveloppe 9, ce qui garantit une bonne étanchéité de la chambre intérieure 4 de la capsule. De même, l'ouverture 75 du tiroir 7 peut ne pas s'étendre sur toute la longueur du tiroir, mais uniquement sur une portion de la paroi 71.

Selon une variante non représentée de l'invention, le tiroir 7 peut également présenter une longueur, selon la direction de l'axe X₇-X₇', inférieure à la longueur de l'enveloppe 9 selon la direction de l'axe X₉-X₉'. Le coulissement du tiroir 7 à l'intérieur de l'enveloppe 9 jusqu'à la venue en butée de l'extrémité 71B du tiroir contre la paroi d'extrémité 95 de l'enveloppe peut alors être obtenu au moyen de l'outil, par exemple la pince, qui permet ensuite le coulissement du piston 5 dans la chambre 4.

Selon une autre variante non représentée de l'invention, une capsule de distribution selon l'invention peut également comprendre une enveloppe 9 qui ne présente pas, selon sa direction longitudinale, de paroi tubulaire 93, mais uniquement la portion de paroi 91. Dans ce cas, l'enveloppe 9 peut être emboîtée par rapport au tiroir 7, par exemple par clipsage de la portion de paroi 91 sur la portion de paroi 71, ou par tout autre moyen approprié. De manière générale, l'assemblage des parties tiroir et enveloppe du corps 3 d'une capsule selon l'invention est obtenue par un emboîtement relatif des parties du corps, l'emmanchement relatif des parties du corps étant un cas particulier d'emboîtement.

Enfin, une capsule de distribution selon l'invention peut être utilisée pour la distribution de produits autres que des produits bi-composants pour applications dentaires. Une capsule conforme à l'invention peut en effet être également utilisée pour la distribution de produits mono-composants. Dans ce cas, le produit mono-composant à distribuer peut être introduit, au choix, dans le volume intérieur 74 du tiroir 7, dans le volume intérieur 94 de l'enveloppe 9 ou dans les deux, avant emboîtement des parties 7 et 9. Toutefois, lorsque le produit à distribuer est un produit mono-composant pâteux, il est avantageux d'introduire le produit dans le volume 74 du tiroir 7, un avantage de la capsule selon l'invention résidant alors dans l'accessibilité améliorée pour le remplissage de la capsule grâce à l'ouverture latérale 75 du tiroir 7. De même, une capsule selon l'invention peut être utilisée pour la distribution de produits autres que des produits à destination dentaire, tels que, à titre d'exemples non limitatifs, des produits de type enduits, plâtres ou ciments, les dimensions de la capsule étant adaptées en fonction de l'application.

## Revendications

1. Capsule (1) de distribution d'un produit (2), notamment d'un produit pâteux, comprenant un corps (3) qui définit une chambre intérieure (4) de réception du produit et est muni d'une ouverture (97) de distribution de produit, un piston (5) étant apte à coulisser dans la chambre (4) le long d'une paroi interne (41) de la chambre, **caractérisée en ce que** le corps (3) comporte une première (7) et une deuxième (9) parties aptes à s'emboîter l'une par rapport à l'autre, la première partie (7) comportant le piston (5) et une première portion (71) de la paroi interne (41) de la chambre (4), le piston (5) et la première portion de paroi (71) étant reliés l'un à l'autre par des moyens sécables (6), alors que la deuxième partie (9) comporte une deuxième portion (91) de la paroi interne (41), les première (71) et deuxième (91) portions de paroi formant la paroi interne (41) de la chambre (4) en configuration emboîtée des première et deuxième parties.

2. Capsule selon la revendication 1, **caractérisée en ce que** la chambre (4) est étanche en configuration emboîtée des première (7) et deuxième (9) parties avec l'ouverture de distribution (97), ou un canal (98) qui s'étend à partir de l'ouverture de distribution (97), obturé(e).

3. Capsule selon l'une quelconque des revendications 1 ou 2, **caractérisée en ce que** la première partie (7) définit un volume (74) de réception de produit (21), ce volume de réception (74) étant accessible par une ouverture (75) d'introduction de produit qui est délimitée par la première portion de paroi (71) transversalement par rapport au piston (5).

4. Capsule selon l'une quelconque des revendications précédentes, **caractérisée en ce que** la paroi interne (41) de la chambre (4) est une paroi cylindrique, les première (71) et deuxième (91) portions de paroi étant deux portions complémentaires de la paroi interne (41) cylindrique sectionnée selon un plan (π).

5. Capsule selon la revendication 4, **caractérisée en ce que** le plan (π) de section de la paroi interne (41) cylindrique est incliné par rapport à l'axe central (X-X') du cylindre défini par la paroi interne (41) selon un angle (α) compris entre environ 1° et 45°.

6. Capsule selon l'une quelconque des revendications précédentes, **caractérisée en ce que** la deuxième partie (9) comporte une paroi tubulaire (93) définissant un volume intérieur (94) de réception de la première portion de paroi (71), la deuxième portion de paroi (91) faisant saillie intérieurement par rapport à la paroi tubulaire (93), les première (7) et deuxième (9) parties étant aptes à s'emboîter l'une par rapport à l'autre par coulissement de la première portion de paroi (71) dans le volume intérieur (94) de la paroi tubulaire (93).

7. Capsule selon l'une quelconque des revendications précédentes, **caractérisée en ce que** la deuxième partie (9) comporte des moyens (99) d'alignement axial de la deuxième partie (9) par rapport à un outil d'actionnement du coulissement du piston (5) dans la chambre (4) le long de la paroi interne (41) en configuration emboîtée des première (7) et deuxième (9) parties.

8. Capsule selon l'une quelconque des revendications précédentes, **caractérisée en ce que** la première partie (7) est une pièce moulée par injection en une seule pièce.

9. Capsule selon l'une quelconque des revendications précédentes, **caractérisée en ce que** l'une parmi la première partie (7) et la deuxième partie (9) comporte des moyens de fixation d'une masselotte, ces moyens de fixation étant aptes à libérer la masselotte dans la chambre (4) en configuration emboîtée des première et deuxième parties.

10. Procédé de distribution d'un produit (2), notamment d'un produit pâteux, au moyen d'une capsule (1) selon l'une quelconque des revendications précédentes, **caractérisé en ce qu'**il comprend des étapes dans lesquelles :
- on introduit le produit (2) dans une ou chaque partie du corps (3) parmi la première partie (7) et la deuxième partie (9) ;
- on emboîte (F₁) les première (7) et deuxième (9) parties l'une par rapport à l'autre ;
- on déchire les moyens sécables (6) et on déplace (F₂) le piston (5) en coulissement dans la chambre (4) le long de la paroi interne (41) de manière à distribuer le produit (2) à travers l'ouverture de distribution (97).

11. Procédé de distribution selon la revendication 10 d'un produit (2) bi-composant, **caractérisé en ce qu'**il comprend des étapes dans lesquelles :
- on introduit un premier composant (21) du produit (2) dans la première partie (7) du corps (3) ;
- on introduit le deuxième composant (23) du produit (2) dans la deuxième partie (9) du corps (3) ;
- on emboîte (F₁) les première (7) et deuxième (9) parties l'une par rapport à l'autre ;
- on mélange les premier (21) et deuxième (23) composants du produit (2) dans la chambre (4) de manière à former le produit (2) ;
- on déchire les moyens sécables (6) et on déplace (F₂) le piston (5) en coulissement dans la chambre (4) le long de la paroi interne (41) de manière à distribuer le produit (2) à travers l'ouverture de distribution (97).

## Claims

1. Capsule (1) for distributing a product (2), especially a pasty product, comprising a body (3) which defines an inner chamber (4) for receiving the product and is provided with a product-distributing aperture (97), a piston (5) being capable of sliding within the chamber (4) along an internal wall (41) of said chamber; **characterised in that** the body (3) has a first part (7) and a second part (9) which are capable of being fitted together, one into the other, the first part (7) having the piston (5) and a first portion (71) of the internal wall (41) of the chamber (4), the piston (5) and the first portion of wall (71) being connected to one another by divisible means (6), while the second part (9) has a second portion (91) of the internal wall (41), the first portion (71) and second portion (91) of wall forming the internal wall (41) of the chamber (4) in the configuration in which the first and second parts are fitted together.

2. Capsule according to claim 1, **characterised in that** the chamber (4) is leakproof in the configuration in which the first part (7) and second part (9) are fitted together, with the distributing aperture (97), or a duct (9E) which extends from said distributing aperture (97), occluded.

3. Capsule according to either of claims 1 or 2, **characterised in that** the first part (7) defines a volume (74) for receiving the product (21), the said receiving volume (74) being accessible through a product-introducing aperture (75) which is delimited by the first portion of wall (71) transversely in relation tc the piston (5).

4. Capsule according to any of the preceding claims, **characterised in that** the internal wall (41) of the chamber (4) is a cylindrical wall, the first portion (71) and second portion (91) of wall being two complementary portions of the cylindrical internal wall (41) which is divided along a plane (π).

5. Capsule according to claim 4, **characterised in that** the sectional plane (π) of the cylindrical internal wall (41) is inclined in relation to the central axis (X-X') of the cylinder defined by said internal wall (41) at an angle (α) of between about 1° and 45°.

6. Capsule according to any of the preceding claims, **characterised in that** the second part (9) has a tubular wall (93) defining an inner volume (94) for receiving the first portion of wall (71), the second portion of wall (91) projecting inwardly in relation to said tubular wall (93), the first part (7) and second part (9) being capable of being fitted together, one into the other, through the sliding of the first portion of wall (71) within the inner volume (94) of the tubular wall (93).

7. Capsule according to any of the preceding claims, **characterised in that** the second part (9) has means (99) for axially aligning the second part (9) in relation to a tool for activating the sliding of the piston (5) within the chamber (4) along the internal wall (41) in the configuration in which the first part (7) and second part (9) are fitted together.

8. Capsule according to any of the preceding claims, **characterised in that** the first part (7) is a piece which is injection-moulded in a single piece.

9. Capsule according to any of the preceding claims, **characterised in that** one part, from among the first part (7) and the second part (9), has means for fixing a sprue, the said fixing means being capable of releasing the sprue within the chamber (4) in the configuration in which the first and second parts are fitted together.

10. Method of distributing a product (2), especially a pasty product, by means of a capsule (1) according to any of the preceding claims, **characterised in that** it comprises stages in which:
- the product (2) is introduced into one or each part of the body (3), from among the first part (7) and the second part (9);
- the first part (7) and second part (9) are fitted together (F₁), one into the other;
- the divisible means (6) are torn apart and the piston (5) is displaced (F₂) in sliding motion within the chamber (4) along the internal wall (41) so as to distribute the product (2) through the distributing aperture (97).

11. Method according to claim 10 of distributing a two-component product (2), **characterised in that** said method comprises stages in which:
- a first component (21) of the product (2) is introduced into the first part (7) of the body (3) ;
- the second component (23) of the product (2) is introduced into the second part (9) of the body (3) ;
- the first part (7) and second part (9) are fitted together (F₁), one into the other;
- the first component (21) and second component (23) of the product (2) are mixed within the chamber (4) so as to form the product (2);
- the divisible means (6) are torn apart and the piston (5) is displaced (F₂) in sliding motion within the chamber (4) along the internal wall (41) so as to distribute the product (2) through the distributing aperture (97).

## Patentansprüche

1. Kapsel (1) zur Verteilung eines Produktes (2), insbesondere eines pastenartigen Produktes, umfassend einen Körper (3), der eine innere Kammer (4) für die Aufnahme des Produktes definiert und mit einer Öffnung (97) zur Verteilung eines Produktes versehen ist, wobei ein Kolben (5) in der Lage ist, in der Kammer (4) entlang einer Innenwand (41) der Kammer zu gleiten, **dadurch gekennzeichnet, dass** der Körper (3) einen ersten (7) und einen zweiten (9) Teil umfasst, die ineinander gesteckt werden können, wobei der erste Teil (7) den Kloben (5) und einen ersten Abschnitt (71) der Innenwand (41) der Kammer (4) umfasst, wobei der Kolben (5) und der erste Wandabschnitt (71) miteinander durch trennbare Mittel (6) verbunden sind, während der zweite Teil (9) einen zweiten Abschnitt (91) der Innenwand (41) umfasst, wobei der erste (71) und der zweite (91) Wandabschnitt die Innenwand (41) der Kammer (4) bilden, wenn der erste und der zweite Teil ineinander gesteckt sind.

2. Kapsel nach Anspruch 1, **dadurch gekennzeichnet, dass** die Kammer (4) dicht ist, wenn der erste (7) und der zweite (9) Teil ineinander gesteckt sind, wobei die Verteilungsöffnung (97) oder ein Kanal (98), der sich von der Verteilungsöffnung (97) aus erstreckt, verschlossen ist.

3. Kapsel nach einem der Ansprüche 1 oder 2, **dadurch gekennzeichnet, dass** der erste Teil (7) ein Volumen (74) für die Aufnahme eines Produktes (21) definiert, wobei dieses Aufnahmevolumen (74) durch eine Öffnung (75) zur Einführung des Produktes zugänglich ist, die von dem ersten Wandabschnitt (71) quer zum Kolben (5) begrenzt ist.

4. Kapsel nach einem der vorhergehenden Ansprüche, **dadurch gekennzeichnet, dass** die Innenwand (41) der Kammer (4) eine zylindrische Wand ist, wobei der erste (71) und der zweite (91) Wandabschnitt zwei komplementäre Wandabschnitte der zylindrischen Innenwand (41) sind, die entlang einer Ebene (π) getrennt sind.

5. Kapsel nach Anspruch 4, **dadurch gekennzeichnet, dass** die Trennebene
*(*π*)* der zylindrischen Innenwand (41) in Bezug zur Mittelachse (X-X') des Zylinders, die von der Innenwand (41) in einem Winkel (α) zwischen ungefähr 1° und 45° definiert ist, geneigt ist.

6. Kapsel nach einem der vorhergehenden Ansprüche, **dadurch gekennzeichnet, dass** der zweite Teil (9) eine röhrenförmigen Wand (93) umfasst, die ein Innenvolumen (94) für die Aufnahme des ersten Wandabschnitts (71) definiert, wobei der zweite Wandabschnitt (91) innen in Bezug zur röhrenförmigen Wand (93) vorspringt, wobei der erste (7) und der zweite (9) Teil durch Gleiten des ersten Wandabschnitts (71) in das Innenvolumen (94) des röhrenförmigen Abschnitts (93) ineinander gesteckt werden können.

7. Kapsel nach einem der vorhergehenden Ansprüche, **dadurch gekennzeichnet, dass** der zweite Teil (9) Mittel (99) zur axialen Ausrichtung des zweiten Teils (9) in Bezug zu einem Werkzeug zur Betätigung des Gleitens des Kolbens (5) in der Kammer (4) entlang der Innenwand (41) umfasst, wenn der erste (7) und der zweite (9) Teil ineinander gesteckt sind.

8. Kapsel nach einem der vorhergehenden Ansprüche, **dadurch gekennzeichnet, dass** der erste Teil (7) ein in einem Stück durch Spritzguss hergestellter Teil ist.

9. Kapsel nach einem der vorhergehenden Ansprüche, **dadurch gekennzeichnet, dass** einer des ersten Teils (7) und des zweiten Teils (9) Mittel zur Befestigung eines Fliehgewichts umfasst, wobei diese Befestigungsmittel das Fliehgewicht in der Kammer (4) freigeben können, wenn der erste und der zweite Teil ineinander gesteckt sind.

10. Verfahren zur Verteilung eines Produktes (2), insbesondere eines pastenartigen Produktes, mit Hilfe einer Kapsel (1) nach einem der vorhergehenden Ansprüche, **dadurch gekennzeichnet, dass** es die folgenden Schritte umfasst, bei denen:
- das Produkt (2) in einen oder jeden Teil des Körpers (3) unter dem ersten Teil (7) und dem zweiten Teil (9) eingeführt wird;
- der erste (7) und der zweite (9) Teil ineinander gesteckt werden (F₁);
- die trennbaren Mittel (6) zerrissen werden und der Koben (5) gleitend in der Kammer (4) entlang der Innenwand (41) verschoben wird (F₂), um das Produkt (2) durch die Verteilungsöffnung (97) zu verteilen.

11. Verteilungsverfahren nach Anspruch 10 für ein Zweikomponentenprodukt (2), **dadurch gekennzeichnet, dass** es die folgenden Schritte umfasst, bei denen:
- eine erste Komponente (21) des Produkts (2) in den ersten Teil (7) des Körpers (3) eingeführt wird;
- die zweite Komponente (23) des Produktes (2) in den zweiten Teil (9) des Körpers (3) eingeführt wird;
- der erste (7) und der zweite (9) Teil ineinander gesteckt werden (F₁);
- die erste (21) und die zweite (23) Komponente des Produktes (2) in der Kammer (4) vermischt werden, um das Produkt (2) zu bilden;
- die trennbaren Mittel (6) zerrissen werden und der Kolben (5) gleitend in der Kammer (4) entlang der Innenwand (41) verschoben wird (F₂), um das Produkt (2) durch die Verteilungsöffnung (97) zu verteilen.
